**Europäisches Patentamt**

**European Patent Office**

**Office européen des brevets**

(19)

(11) **EP 1 347 589 A1**

(12) **EUROPEAN PATENT APPLICATION**

(43) Date of publication:
**24.09.2003 Bulletin 2003/39**

(51) Int Cl.7: **H04J 14/02**, H04J 14/06,
G01M 11/00, H04B 10/18

(21) Application number: **02360096.8**

(22) Date of filing: **21.03.2002**

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventors: • **Veith, Gustav, Dr. 75378 Bad Liebenzell (DE)** • **Bülow, Henning, Dr. 70806 Kornwestheim (DE)** |
| (71) Applicant: **ALCATEL 75008 Paris (FR)** | (74) Representative: **Brose, Gerhard, Dipl.-Ing. et al Alcatel Intellectual Property Department, Stuttgart 70430 Stuttgart (DE)** |

(54) **A wavelength division multiplex transmission system or a polarisation division multiplex system which means for measuring dispersion characteristics, an optical transmitter, an optical receiver and a method therefore**

(57)     The invention relates to a wavelength division multiplex transmission (WDM) system or a polarisation division multiplex division system with an optical transmitter (OT), an optical receiver (OR) and an optical transmission fiber (TF), the receiver (OR) showing means for measuring dispersion characteristics while transmitting optical signals over the transmission fiber (TF), the transmitter (OT) comprising means for sending correlation signals (CP) on at least two different wavelength or polarisation channels and the receiver (OT) comprising means for performing a correlation determination

of said correlation signals to determine a transmission time difference between said different channels, an optical transmitter (OT), an optical receiver (OR) and a method therefor.

Fig.4

EP 1 347 589 A1

**Description**

The invention relates to a wavelength division multiplex transmission system with means for measuring dispersion characteristics according to the preamble of claim 1, an optical transmitter according to the preamble of claim 10, an optical receiver according to the preamble of claim 11 and a method according to the preamble of claim 12 therefore.

In modern optical transmission networks, a so-called wavelength division multiplex method (WDM) is nowadays widely used. In WDM (transmission) systems, a certain number of modulated optical carriers with different frequencies, further named WDM-signals, are simultaneously transmitted in the optical waveguide. Each optical carrier thus constitutes an independent (wavelength) channel. In current commercial WDM systems having so-called dense wavelength-division multiplexing (DWDM), up to 40 channels are transmitted that have an equidistant frequency spacing of the carrier frequencies of down to 50 GHz.

One phenomenon of optical transmission in an optical fiber is represented by the chromatic dispersion, mainly depending on the structure and the material of the fiber. The chromatic dispersion means, that the phase velocity of a propagating optical wave is dependent on its frequency. Chromatic dispersion thus causes a duration enlargement of optical pulses, as different spectral parts of said pulses are transmitted with different phase velocities. Two adjacent pulses of an optical signal may thus overlap with each other at a receiver station.

The chromatic dispersion of an optical transmission fiber can be characterised by the dispersion parameter D. This dispersion parameter D describes the spreading of pulses in picoseconds (ps) per nanometer (nm) of bandwidth and per kilometer (km) of fiber length. The chromatic dispersion D of a typical monomode fiber is about 17 ps/(nm * km) at a wavelength about 1550 nm. The chromatic dispersion can be split into a static part and a dynamic part. As the static part may be compensated with fixed dispersion compensation optical elements, e.g. a dispersion compensating fiber of defined fixed length, compensation of the dynamic part, i.e. variations of the dispersion, must be performed by real time measurement and real time control.

Current WDM transmission systems operating at bit rates of 10 Gbit/s (per channel) or below do not need any dispersion control since the relatively small statistical variations of the chromatic dispersion normally does not affect the system performance. The optical bandwidth of a signal, however, increases proportionally with the bit rate. Thus, dispersion tolerances decreases when raising bit rates. In future WDM transmission systems, operating at bit rates of 40 Gbit/s and beyond, statistical variations of the total chromatic dispersion and/or of the dispersion slope of the fiber will cause degradations in the overall WDM system performance.

Various methods are known to measure the chromatic dispersion of an optical fiber. One method is based on a pulse delay time difference method. Another method based on a phase comparison method is described in US 4,799,79 for an automatic chromatic dispersion measurement system. Two optical signals, having different wavelengths, are both intensity modulated by a sine wave signal. Simultaneously transmitted on the fiber, the signals, due to their different group velocities, arrive with different velocity and thus with different phases at receiver side. From measurement of the respective time difference between said phases, the chromatic dispersion is obtained.

The object of the invention is to describe an alternative method for measuring the chromatic dispersion well adapted for WDM transmission systems and further for measuring the polarisation dispersion in polarisation division multiplex division systems.

This object is achieved in accordance with the invention by a wavelength division multiplex transmission system or a polarisation division multiplex division system according to the teaching of claim 1, an optical transmitter according to the teaching of claim 10, an optical receiver according to the teaching of claim 11 and a method according to the teaching of claim 12.

Due to the signal spreading described above, dispersion strongly limits the maximum bit rate of an optical signal to be transmitted over on a dispersive medium. Dispersion in a WDM system e.g. leads to wavelength dependent group velocities for optical signals to be transmitted over a dispersive medium. Thus, in a WDM transmission system the different WDM signals, i.e. different modulated carrier frequencies each show a different transmission time.

The present invention is based on a correlation determination between optical signals received on at least two different wavelength or polarisation channels. An optical transmitter therefore adds correlation signals to the (useful) optical signals of said channels before transmitting said signals over an optical fiber to an optical receiver. The receiver performs a correlation determination of the received optical signals for determination of the corresponding transmission time difference.

An advantageous further development of the invention consists in a control loop for dispersion compensation of said optical fibre on the base of said determination of the transmission time difference(s).

Further developments of the invention can be gathered from the dependent claims and the following description.

In the following the invention will be explained further making reference to the attached drawings in which:

Fig.1a    shows a exemplary wavelength distribution of WDM signals in a WDM system according the invention with correlation measurements between neighbouring WDM channels,

Fig.1b    shows a exemplary wavelength distribution of WDM signals in a WDM system according the invention with a correlation measurement between distant WDM channels,

Fig.2a    schematically shows an optical transmission system according to the invention,

Fig.2b    schematically shows a method of correlation measurement according to the invention in a system according to Fig.2a,

Fig.3a    shows an example of a first embodiment of an optical receiver according to the invention,

Fig.3b    shows an example of a second embodiment of an optical receiver according to the invention and

Fig.4    schematically shows a dispersion compensation system based on a dispersion measurement according to the invention.

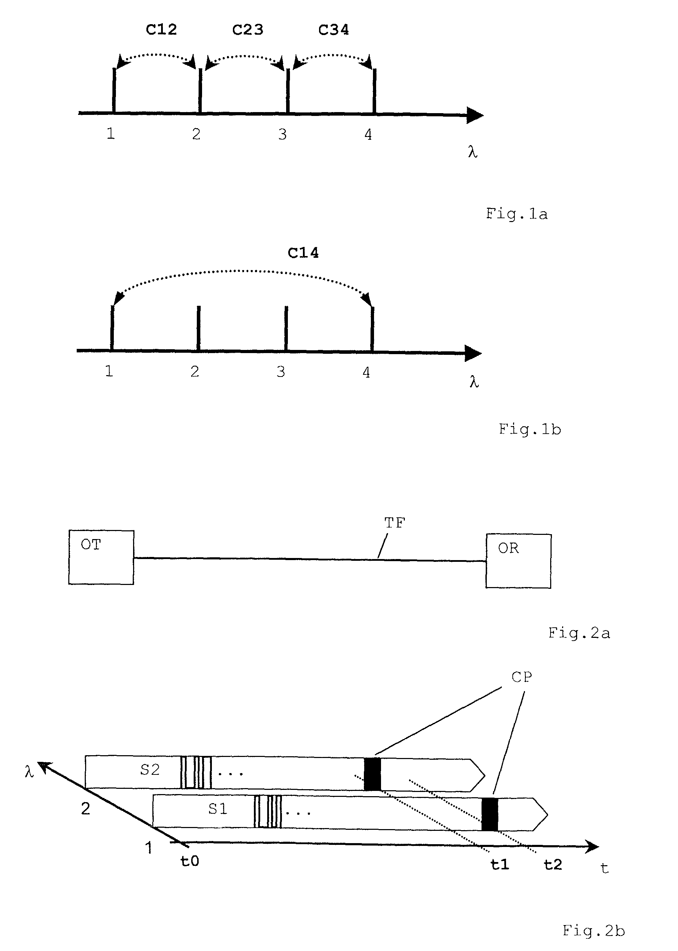

Fig.1a schematically shows an exemplary ensemble of four WDM channels 1, 2, 3 and 4 of a WDM (transmission) system presented as discrete lines plotted over the wavelength $\lambda$, each line representing the carrier wavelength of a corresponding WDM channel. Further dotted double arrows C12, C23 and C34 between channel 1 and channel 2, channel 2 and channel 3 and channel 3 and channel 4 respectively symbolise channel correlation relations between pairs of neighbouring channels. Fig.1b exemplary shows the same ensemble of four WDM channels. A dotted double arrow C14 between channel 1 and channel 4 symbolise a correlation relation between the most remote channels 1 and 4. The correlation relations are evaluated by correlation analysis described in the following.

Fig.2a schematically shows an optical transmission system according to the invention with an optical WDM transmitter OT, a transmission fiber TF and an optical WDM receiver OR. The optical transmitter OT transmits an ensemble of WDM signals received by the optical receiver OR. In Fig.2b, by way of example, two WDM signals S1 and S2 of a corresponding first and second WDM channel 1 and 2 are shown symbolised as broad arrows over the time t. In each of the WDM channels 1 and 2, short inserted correlation signals bearing similar correlation data packets CP are shown at a time position t2 and t1 respectively.

The correlation signals are inserted simultaneously in the optical transmitter OT at a time t0. After transmission on the transmission fiber TF, said correlation signals arrive in the receiver at different reception times, the correlation signal inserted in the first WDM channel 1 at the time t2 and in the second WDM channel 2 at the time t1. The reception time thus corresponds to the transmission time of a signal transmitted over the transmission fiber TF. Said transmission time is depending on the length of the transmission fiber TF and on the group velocity of said signal. As described in the introduction, the group velocity of a signal transmitted over a dispersive optical medium, e.g. glass fiber, is depending on the frequency spectrum of the transmitted signal. In the wavelength band of actual WDM systems, the group velocity rises with an increasing wavelength of the corresponding signal carrier.

The knowledge of group velocity differences in different WDM channels can be used to determine dispersion coefficients of the transmission fiber TF and can be further used to compensate for the dispersion of said transmission fiber by controllable dispersion compensation elements explained in the further description.

The time difference in receiving the correlation packets CP of two WDM channels at the optical receiver OR may be determined by different measurements. A first alternative is to carry out is determined either by direct convolution of the corresponding WDM signals S1 and S2, introducing in the receiver a variable time delay of signal S1 against the other signal S2 , i.e. by shifting one signal against the other, multiplying said signals or signal values and integrating the multiplication result over a certain time interval. If the signals S1 and S2 each contain a correlation signal, either added or inserted, a marked correlation maximum of a high value compared to other correlation values is obtained for a certain introduced time delay that represents the transmission time difference. The correlation signal may contain a pseudo noise data sequence.

Alternatively, the transmission time difference is measured by separately carrying out a correlation measurement of each of the received signal S1 or S2 with a correlation signal stored in the receiver. At the time t1, a correlation maximum for the second signal S2 and at the time t2 a correlation maximum for the first signal S1 is detected. The time difference t2 - t1 corresponds to the group velocity difference in the corresponding WDM channels 1 and 2.

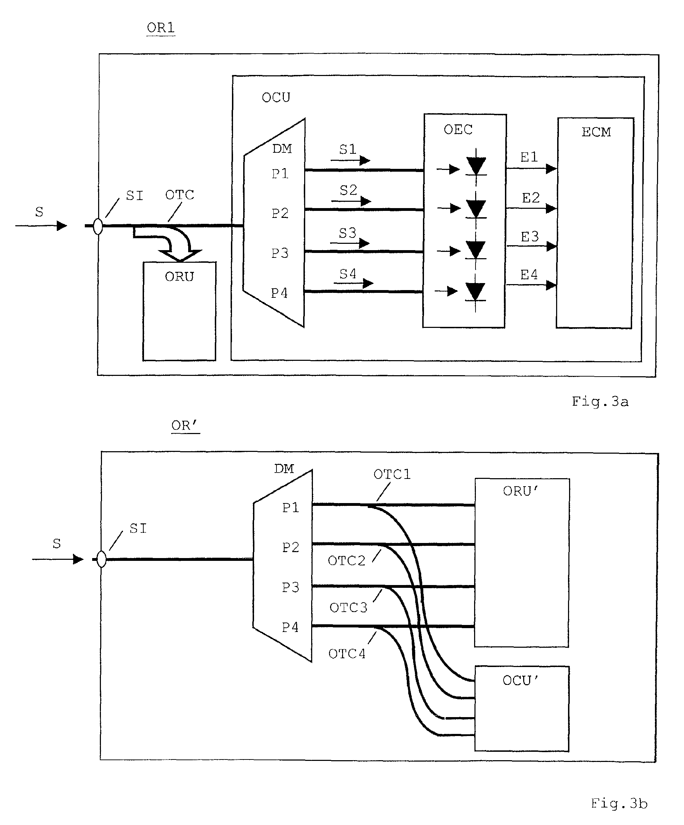

The correlation measurement can be generally performed either in the optical domain or the electrical domain. In each of the domains, different realisation variants exist. In the following Fig.3a and Fig.3b, examples will be given for the realisation of correlation measurement units.

Fig.3a shows a first optical receiver OR1 with a signal input SI connected to a tap coupler OTC, that splits the received signal to one branch connected to an optical receiving unit ORU and another branch connected to a first optical correlation unit OCU. An optical signal S containing a number of WDM signals S1- S4 is irradiated to said signal input SI. The first optical correlation unit OCU comprises a (WDM) de-multiplexer DM with one optical input and, by way of example, four (optical) outputs for demultiplexing selected WDM signals, an opto-electrical converter OEC and an electrical correlation measurement unit ECM. The input of the optical de-multiplexer DM is connected to the optical tap coupler over one of said branches. Each of four output ports P1- P4, each port leading one corresponding WDM signal S1- S4, is connected to each an input of the opto-electrical converter OEC. The opto-electrical converter OEC is electrically connected to the electrical correlation measurement unit ECM, providing said unit with electrical signals EI- E4, symbolized as arrows, derived by conversion of the corresponding optical signals S1-S4.

The optical receiving unit ORU serves for deriving the (regular) data carried by the WDM signals according to the prior art and is not further discussed here.

As de-multiplexer DM of the optical correlation unit OCU, a so-called arrayed waveguide gratings (AWG) may be utilised. arrayed waveguide gratings perform WDM multiplexing and demultiplexing by using a planar light wave circuit pattern on a silicon substrate. Wavelength separation of different channels is performed advantageously on a single chip by passing the light through a grating consisting of a certain number of waveguides of precisely defined different lengths.

In the opto-electrical converter OEC, for each channel 1- 4 a photo diode, e.g. a PIN photo diode, is provided for generating in an electrical circuit an electrical current or voltage proportional to the actual intensity of the signal light of the corresponding channel.

In the electrical correlation measurement unit ECM, the data of each the selected WDM signals, e.g. a sequence of digital values, each representing "0" or "1", is extracted approximately in real time from the corresponding electrical signals EI- E4. In certain time intervals, the optical transmitter OT, shown in Fig. 2a, simultaneously inserts correlation signals into selected WDM signals, the correlation signal containing a correlation sequence, e.g. a pseudo noise bit sequence of a certain length. Said correlation sequence is also stored in the correlation measurement unit ECM. Continuously or within appropriate time intervals, correlation measurements are performed between the stored correlation sequence and each of the extracted data sequences. A correlation measurement between one received data sequence and the stored correlation sequence is performed by firstly moving or shifting the correlation sequence into a certain time position respectively to the received sequence, then performing a multiplication between each adjacent data coefficients of said sequences and finally adding up said multiplication results to obtain a correlation value. The multiplications of digital (two) coefficients can be performed by carrying out logical AND operations of said coefficients. A correlation maximum is derived at a time, where the stored correlation sequence is exactly covering the inserted correlation sequence, further regarded as the receiving time of said correlation signal. A continuous correlation measurement can be performed by further shifting the correlation sequence every time period corresponding to the bit time duration for one data position and repeating the above explained computation. Performing a continuous correlation measurement for the selected WDM channels 1- 4, each the receiving times of the correlation signals inserted in the selected WDM channels is obtained. Relative time differences of the transmission times between different WDM channels can be determined.

The correlation signals must not be inserted necessarily at the same time into the different WDM signals. They might be inserted pair by pair in a certain sequence.

Alternatively to the insertion of correlation signals CP, said correlation signals are continuously or time by time superposed to the data signals in each of said different channels. To not disturb the data signals, said correlation signals might consist of very narrow pulses. This method can be regarded as amplitude shift keying (ASK).

In further alternatives, the data signals of said different channels are frequency shifted or phase shifted, the shifting representing identical correlation data sequences. This methods can be regarded as frequency shift keying (FSK) or phase shift keying (PSK) respectively.

The group velocity dispersion (GVD) or above mentioned dispersion parameter $D(\lambda)$ is proportional to the derivative of the transmission time t with respect to the wavelength $\lambda$ of a signal divided by the length L of the transmission line:

$$D(\lambda) = 1/L * dt/d\lambda$$

A very easy solution to obtain said dispersion parameter exists, if the dispersion parameter D is regarded to be linearly dependent from the wavelength. If the slope of said dispersion parameter (with regard to the wavelength) is known and it is expected, that the different signals channels show similar temporal deviation, only one transmission time difference, e.g. the transmission time difference between the first WDM channel 1 and the second WDM channel 2 must be measured: delta t = t2-t1. The wavelength difference delta $\lambda$ between said WDM channels 1 and 2 as well as the length L of the transmission fiber is known. Thus the dispersion D is obtained as follows:

$$D = 1/L * delta\ t/delta\ \lambda$$

The actual dispersion of the other channels than can be derived from said determined dispersion.

To minimize the influence of measurement errors, it can be of advantage to carry out, instead of the described neighbour channel 1 and 2 correlation, a correlation measurement of thew most distant channels 1 and 4.

As described in the beginning, it is often sufficient to regard the dispersion to be lineary dependent from the wavelength. However, for higher data rates or WDM systems with high WDM channel numbers, it could be necessary to consider the dispersion slope. In this case, it is necessary to select at least three WDM channels to obtain two transmission time difference values. These two time differences are sufficient to obtain said dispersion slope parameter $dD/d\lambda$. To obtain higher order dependencies of the dispersion D of the wavelength, an appropriate number of transmission time difference values must be obtained.

In Fig.3a, a separate receiving unit OCO for correlation measurement is provided. Alternatively, the electrical correlation unit may obtain the electrical data E1- E4 directly from the regular optical receiving unit ORU.

A further alternative to Fig.3a is shown in the following Fig.3b. Fig.3b shows an alternative second optical receiver OR2 with a signal input SI directly connected to the (WDM) de-multiplexer DM shown in Fig.3a. Each of the four output ports P1- P4 is connected via optical connections to a second optical receiving unit ORU. Further, in selected of said optical connection, in the shown example all connections are selected, an optical tap coupler OTC1- OTC4 is shown to provide parallel optical connections to a second optical correlation unit OCU'.

The second optical receiving unit ORU' serves, similarly to the optical receiving unit ORU of Fig.3a, for deriving the (regular) data carried by the WDM signals according to the prior art and not further discussed here.

The second optical correlation unit OCU' is provided with optical WDM signals of selected WDM channels. Instead of electrical correlation described in Fig.3a, optical correlation measurement is performed by the second optical correlation unit OCU'. The second optical correlation unit OCU'may comprise a set of different optical delay lines. Varying the time shift between two WDM signals can be performed by switching from one to another appropriate delay line. The switching can be performed by means of optical switches, e.g. semiconductor optical amplifiers (SOA's).

Alternatively to the correlation measurement in the optical domain, the correlation measurement can be carried out after an opto-electrical conversion of the WDM signals. This alternative resembles the first optical receiver OR1 described in Fig.3a with optical signal splitting behind the demodulator instead of optical signal splitting before the demodulator DM.

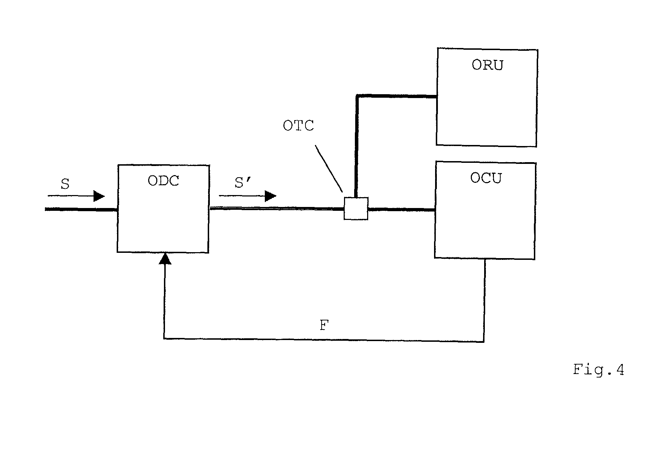

Dispersion measurement as described above can be advantageously used for dispersion compensation control in an WDM transmission system. In the following Fig.4, a method for dispersion control is described. Fig.4 shows a dispersion compensation system with an optical dispersion compensation unit ODC and further the optical tap coupler OTC, the optical receiving unit ORU and the optical correlation unit OCU according to Fig.3a. The optical signal S is fed to the input of the dispersion control unit ODC. The tap coupler OTC connected to the output of the dispersion control unit ODC splits, according to Fig.3a, the received dispersion controlled signal S' into two optical branches, one of them connected to the optical receiving unit ORU and the other of them connected to the optical correlation unit OCU. An electrical control signal F, symbolised as arrow, is conducted from the optical correlation unit OCU to the dispersion compensation unit ODC.

The dispersion compensation unit ODC comprises a set of dispersion compensation fiber pieces of different lengths or of other dispersive compensation elements. Depending on the electrical control signal F, an appropriate fiber pieces is inserted in the transmission line by means of optical switches, e.g. semiconductor optical amplifiers (SOA's).

If physical fibre properties are known, especially if the dispersion slope is known, this properties can be taken into account for fixed dispersion compensation and it is sufficient to compensate only residual dispersion.

Correlation measurement results for control of the dispersion within the wavelength band of the overall WDM channel ensemble can be derived through correlation measurement between all neighbouring channel pairs out of the channel ensemble. Alternatively, said correlation measurement can be performed only for a subset of pairs of neighbouring and/or distant channels.

Often higher order dispersion compensation down to a dispersion slope compensation is not required. Then only one single correlation measurement between the WDM signals of two separated WDM channels is necessary to be used to control the compensator within the whole wavelength band of the WDM channels. The correlation measurement can be performed between neighbour channels or distant channels as describe above.

If the dispersion slope or higher order dispersions need to be compensated, a corresponding higher number of WDM channel correlation measurements must be performed. However, if physical fibre properties are known, then a reduced set of measurements of WDM channel correlations is sufficient to compensate for the dispersion of the transmission fiber TF.

In the following an example of control of a dispersion, that is assumed to be constant (no higher order terms) is described. The optical correlation unit OCU determines the transmission time difference by way of example between the WDM signals of two adjacent WDM channels 1 and 2. Depending on said time difference, a control signal F is generated and transmitted to the dispersion compensation unit ODC, that compensates for the dispersion corresponding to said control signal. With decreasing transmission time difference the control signal current or voltage decreases. The control signal current or voltage vanishes, if the time difference vanishes, i.e. the dispersion is completely compensated for all WDM channels.

The invention may not only be used for chromatic dispersion measurement and/or control but also for polarisation mode dispersion (PMD) control in polarisation division multiplexing systems. On the transmission fiber, two orthogonal transmission modes exist which can be used as different signal channels. The transmission times for each polarisation mode varies relatively fast depending on disturbances on the transmission line. The temporal variation leads to optical signal degradation limiting the maximum possible transmission data rate. To compensate for the polarisation mode dispersion, transmission time differences between said polarisation channels can be performed in similar way as the above described measurements of chromatic dispersion.

The insertion of correlation signals advantageously takes place in equidistant insertion time intervals. Depending on the dispersion variation behaviour, e.g. slow temporal changes of the chromatic dispersion depending on a change of temperature or fast changing temporal changes depending of the polarisation mode dispersion depending on mechanical disturbances of the transmission fiber, an appropriate insertion time interval can be chosen.

**Claims**

1. A Wavelength division multiplex transmission (WDM) system or a polarisation division multiplex system with an optical transmitter (OT), an optical receiver (OR) and an optical transmission fiber (TF), the receiver (OR) showing measurement means for measuring dispersion characteristics while transmitting optical signals over the transmission fiber (TF), **characterised in, that** the transmitter (OT) comprises correlation signal sending means for sending signals (CP) on at least two different wavelength or polarisation channels and the receiver (OT) comprises correlation determination means to determine a transmission time difference between said different wavelength or polarisation channels.

2. Transmission system according to claim 1, **characterised in, that** the means for sending correlation signals (CP) are realised such, that the data signals to be transmitted on different channels are interrupted each for a certain time period to insert in each of said at least two different channels a correlation signal (CP) representing identical correlation data sequences.

3. Transmission system according to claim 1, **characterised in, that** the correlation signal sending means are realised such, that the correlation signals (CP) representing identical correlation data sequences are each superposed to a data signal of each of said at least two different channels.

4. Transmission system according to claim 1, **characterised in, that** the correlation signal sending means are realised such, that the data signals carried on said at least two different channels are each frequency shifted or phase shifted, the shifting representing identical correlation data sequences.

5. Transmission system according to claim 2, 3 or 4, **characterised in, that** the correlation determination means in the receiver (OR) comprises storing means for storing said correlation data sequence, and comparison means to compare said stored correlation sequence with the received correlation data of the at least two different channels.

6. Transmission system according to claim 1, **characterised in, that** storing means for storing dispersion parameters of the transmission fiber (TF) and dispersion characteristics determination means for determining the dispersion characteristics out of said dispersion parameters and the determined transmission time differences are comprised.

7. Transmission system according to claim 6, **characterised in, that** the storing means are realised to store the dispersion slope of said transmission fiber (TF) and that the dispersion characteristics determination means are realised to determine the dispersion of said fiber out of said dispersion slope and one or more determined transmission time differences.

8. Transmission system according to claim 6, **characterised in, that** the dispersion characteristics determination means are realised such, that the dispersion and the dispersion slope are determined by at least two determined transmission time differences.

9. Transmission system according to claim 1, **characterised in, that** the optical receiver includes generating means to generate a control signal (F) on the base of the transmission time difference, a connection to a dispersion control device (ODC) for transmission of said control signal (F) and a dispersion control device (ODC) for compensation of the dispersion of the transmission fiber (TF) on the base of said control signal (F).

10. An optical transmitter (OT) to be connected to an optical transmission fiber (TF) for transmitting optical signals on different optical channels of a wavelength division multiplex transmission (WDM) system or polarisation division multiplex division system, **characterised in, that** the transmitter (OT) comprises means for sending correlation signals (CP) on at least two different of said channels.

11. An optical receiver (OR) to be connected to an optical transmission fiber (TF) for receiving optical signals on different optical channels of a wavelength division multiplex transmission (WDM) system or polarisation division multiplex division system, **characterised in, that** the receiver (OT) comprises means for performing a correlation measurement of correlation signals received on different of said channels to determine a transmission time difference between a pair of said different channels.

12. A method in a wavelength division multiplex (WDM) transmission system or a polarisation division multiplex division system, wherein an optical receiver (OR) measures dispersion characteristics while transmitting optical signals over a transmission fiber (TF), **characterised in, that** an optical transmitter (OT) sends correlation signals (CP) on at least two different wavelength or polarisation channels over said transmission fiber (TF) and the receiver (OT) performs a correlation determination of the received optical signals for determination of the corresponding transmission time difference.

Fig.1a

Fig.1b

Fig.2a

Fig.2b

OR1

Fig.3a

OR'

Fig.3b

9

Fig.4

**European Patent Office**

**EUROPEAN SEARCH REPORT**

Application Number

EP 02 36 0096

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 812 075 A (NORTHERN TELECOM LTD) 10 December 1997 (1997-12-10) * column 9, line 22 - line 31 * * column 11, line 16 - line 50 * * column 12, line 47 - column 13, line 36 * * figures 1,4,9,10 * | 1-12 | H04J14/02 H04J14/06 G01M11/00 H04B10/18 |
| X | EP 0 444 348 A (AMERICAN TELEPHONE & TELEGRAPH) 4 September 1991 (1991-09-04) * column 7, line 58 - column 8, line 21; figures 1,2,6-8 * | 10 | |
| A | * column 10, line 15 - line 22 * | 1,11,12 | |

|  | TECHNICAL FIELDS SEARCHED (Int.Cl.7) |
|---|---|
|  | H04J G01M H04L H04B |

~~The present search report has been drawn up for all claims~~

| Place of search | Date of completion of the search | Examiner |
|---|---|---|
| THE HAGUE | 5 September 2002 | Fouasnon, 0 |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12 (alternative a)

**European Patent Office** | **LACK OF UNITY OF INVENTION SHEET B** | **Application Number** EP 02 36 0096

The Search Division considers that the present European patent application does not comply with the requirements of unity of invention and relates to several inventions or groups of inventions, namely:

1. Claims: 1 - 12 (alternative a)

   A dispersion characteristics measurement in an optical transmission by sending and determining correlation signals, means to determine a transmission time difference between different wavelengths in a wavelength division multiplex system.

2. Claims: 1 - 12 (alternative b)

   A dispersion characteristics measurement in an optical transmission by sending and determining correlation signals, means to determine a transmission time difference between polarisation channels in a polarisation division multiplex system.

## ANNEX TO THE EUROPEAN SEARCH REPORT
## ON EUROPEAN PATENT APPLICATION NO.

EP 02 36 0096

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2002

| Patent document cited in search report | | Publication date | Patent family member(s) | | Publication date |
|---|---|---|---|---|---|
| EP 0812075 | A | 10-12-1997 | US 6252692 B | | 26-06-2001 |
| | | | JP 10084317 A | | 31-03-1998 |
| | | | CA 2207126 A | | 07-12-1997 |
| EP 0444348 | A | 04-09-1991 | US 5063559 A | | 05-11-1991 |
| | | | CA 2032089 C | | 15-03-1994 |
| | | | CA 2032089 A | | 29-08-1991 |
| | | | DE 69018061 D | | 27-04-1995 |
| | | | DE 69018061 T | | 10-08-1995 |
| | | | HK 81996 A | | 17-05-1996 |
| | | | JP 3073540 B | | 07-08-2000 |
| | | | JP 6097915 A | | 08-04-1994 |
| | | | KR 157429 B | | 16-11-1998 |

EPO FORM P0459

For more details about this annex : see Official Journal of the European Patent Office, No. 12/82